# EUROPÄISCHE PATENTSCHRIFT

(11) **EP 3 030 378 B1**
(45) Veröffentlichungstag und Bekanntmachung des Hinweises auf die Patenterteilung: **18.10.2017**
(21) Anmeldenummer: 14744769.2
(22) Anmeldetag: 12.07.2014
(51) Int. Cl.: B25B 5/00, B25B 5/10, B25B 5/16, B23K 37/04

(54) **SPANNWERKZEUG**
CLAMPING TOOL
OUTIL DE SERRAGE

(30) Priorität: 06.08.2013 DE 202013007011 U
(43) Veröffentlichungstag der Anmeldung: 15.06.2016
(73) Patentinhaber: Siegmund, Bernd, 86845 Grossaitingen (DE)
(72) Erfinder: Siegmund, Bernd, 86845 Grossaitingen (DE)
(74) Vertreter: Seifert, Thomas
(86) Internationale Anmeldenummer: PCT/EP2014/001917
(87) Internationale Veröffentlichungsnummer: WO 2015/018476

(56) Entgegenhaltungen:
- CH-A5- 608 736
- DE-A1-102009 022 013
- DE-A1-102010 041 568
- GB-A- 2 192 826
- US-A- 4 169 562

## Beschreibung

Die Erfindung bezieht sich auf ein Spannwerkzeug mit einer Strebe, an deren einem Ende eine Halterung für eine Spanneinrichtung angeordnet ist, wobei die Spanneinrichtung um eine senkrecht zur Längsrichtung der Strebe verlaufende Achse schwenkbar ist.

Ein derartiges Spannwerkzeug ist aus der DE 100 11 490 A1 bekannt, wobei ein gesonderter Bauteil für die Spanneinrichtung um eine Achse kippbar gelagert ist, indem zwei Achsstummelschrauben durch die Strebe hindurch in Bohrungen des gesonderten Bauteils eingreifen. Damit sollen schädliche, der gewollten Verspannung entgegenwirkende Kräfte vermieden werden. Es ist jedoch nicht möglich, unterschiedliche Richtungen, in die die Spanneinrichtung wirkt, zu realisieren.

Die DE 10 2009 022 013 A1 beschreibt ein anderes Spannwerkzeug, bei dem die Richtung, in die die Spanneinrichtung wirkt, verändert werden kann. Dazu kann eine durch die Strebe hindurch greifende Halterung für die Spanneinrichtung mit einer Schraube in verschiedenen Positionen festgestellt werden. Für die Veränderung der Spannrichtung ist es aber erforderlich, die Schraube zu lösen, die gewünschte Position der Halterung einzustellen und die Schraube wieder anzuziehen.

Beispielsweise finden derartige Spannwerkzeuge in Verbindung mit Schweißtischen Verwendung, mit denen sich Gegenstände aufspannen und verschweißen oder auf andere Weise bearbeiten lassen. Daneben gibt es jedoch auch eine Vielzahl anderer Einsatzmöglichkeiten für Schweißtische, beispielsweise zum Vermessen von Vorrichtungen oder dergleichen. Derartige Schweißtische sind etwa aus der EP 0 541 904 A1 oder der DE 91 09 540 U1 bekannt. Auf den Inhalt dieser Druckschriften wird Bezug genommen und dieser ausdrücklich auch zum Gegenstand der vorliegenden Anmeldung gemacht.

Schweißtische besitzen in ihrer Oberfläche und gegebenenfalls auch in seitlichen Wangen der Tischplatte eine Vielzahl von meist runden Öffnungen, die in einem gleichmäßigen Rastermaß angeordnet sind. Daneben besitzen die Schweißtische ein vielfältiges Zubehör, mit dem das Aufspannen von Gegenständen ermöglicht wird. So sind im wesentlichen winkelförmige Stützen vorgesehen, die ebenfalls runde Öffnungen oder aber auch langlochförmige Öffnungen aufweisen. Diese Stützen können untereinander oder mit dem Tisch durch Spannmittel, etwa Spannbolzen verbunden werden, die aus einer Gewindeschraube mit zugehöriger Mutter bestehen können. Daneben finden auch Spannbolzen Verwendung, die von einer Seite aus in die Öffnungen des Tisches eingeführt werden und sich innerhalb der Öffnung oder an der Unterseite der Tischplatte abstützen. Neben den bereits genannten Druckschriften sind solche Spannbolzen auch aus der DE 199 17 209 A1, DE 202 19 317 U1, bekannt, auf deren Inhalt Bezug genommen und zum Gegenstand der vorliegenden Anmeldung gemacht wird.

Daneben werden im Zusammenhang mit Schweißtischen als Spannmittel Schraubzwingen verwendet, die ebenfalls zum Verspannen von Gegenständen dienen. Solche Schraubzwingen finden sich neben den bereits genannten Druckschriften auch in der US 4 867 427, DE 100 11 490 A1, DE 200 23 552 U1, DE 202 04 107 U1, DE 202 12 731 U1, DE 202 19 317 U1, DE 10 2009 022 013 A1 oder in Form von Schnellspannzwingen in der DE 90 15 218 U1. Auch auf den Inhalt dieser Druckschriften wird Bezug genommen und zum Gegenstand der vorliegenden Anmeldung gemacht.

Als weiteres Zubehör sind noch verschiedene Anschläge mit runden und/oder langlochförmigen Öffnungen und Prismen bekannt.

Der Erfindung liegt das Problem zugrunde, ein Spannwerkzeug anzugeben, bei dem verschiebende, die Maßgenauigkeit beim Spannen beeinträchtigende Kräfte vermieden werden und gleichzeitig auf einfache Weise unterschiedliche Richtungen, in die die Spanneinrichtung wirkt, eingestellt werden können.

Gelöst wird diese Aufgabe mit den Merkmalen des unabhängigen Anspruchs. Vorteilhafte Ausgestaltungen der Erfindung ergeben sich aus den abhängigen Ansprüchen.

Bei dem erfindungsgemäßen Spannwerkzeug umfasst die Halterung eine an der Strebe angeordnete Buchse, in der eine Aufnahme für die Spanneinrichtung drehbar gelagert ist, wobei die Buchse wenigstens eine Nut in ihrem Inneren sowie Ausnehmungen für die Spanneinrichtung aufweist und ein in der Nut/den Nuten befindlicher, die Nut(en) geringfügig überragender O-Ring die Drehbeweglichkeit der Aufnahme hemmt. Das Spannwerkzeug kann mit seiner Strebe in Öffnungen eines Schweißtischs eingeführt werden und dann mit der Spanneinrichtung eine Kraft auf beispielsweise eine zu verschweissende Anordnung ausgeübt werden. Dabei erfolgt während des Spannens ein Verkanten der Strebe in der Öffnung. Gegebenenfalls auftretende verschiebende Kräfte, die die hemmende Wirkung des O-Rings/der O-Ringe auf die Drehbeweglichkeit der Aufnahme übersteigen, werden ausgeglichen, so dass die Maßgenauigkeit beim Spannen nicht beeinträchtigt wird. Gleichzeitig ist es möglich, die Richtung, in die die Spanneinrichtung wirkt, im Rahmen der Abmessungen der Ausnehmungen für die Spanneinrichtung in der Buchse zu verstellen, indem die Spanneinrichtung mit ihrer Aufnahme gegen die hemmende Wirkung des O-Rings/der O-Ringe auf die Drehbeweglichkeit der Aufnahme bewegt wird. Beispielsweise ist ein Verstellbereich von +30° und -30° um die Mittellage der Spanneinrichtung denkbar, insgesamt also von 60°. Durch die hemmende Wirkung des O-Rings/der O-Ringe auf die Drehbeweglichkeit der Aufnahme ist sichergestellt, dass die eingestellte Richtung, in die die Spanneinrichtung wirkt, beibehalten wird und nicht etwa durch die Schwerkraft wieder verändert wird. Dabei besitzt das Spannwerkzeug einen einfachen Aufbau und ist unempfindlich gegenüber einer rauen Behandlung oder Verschmutzungen, wie diese in der Praxis häufig auftreten.

Vorteilhafterweise sind im Inneren der Buchse zwei Nuten mit jeweils einem O-Ring vorgesehen, was zu einer gleichmäßigen Wirkung der gewünschten Hemmung der Drehbeweglichkeit der Aufnahme führt.

Die Drehbeweglichkeit der Aufnahme für die Spanneinrichtung in der Buchse kann besonders einfach erreicht werden, wenn die Aufnahme zylindrisch ausgestaltet ist.

Eine weitere Verbesserung der Einsatzmöglichkeiten des Spannwerkzeugs wird erreicht, wenn zusätzlich eine Vertikalstrebe mit einer an einem Ende angeordneten Führung für die Strebe vorgesehen ist. Dabei kann die Führung in ihrem Inneren wenigstens eine Nut aufweisen und ein in der Nut/den Nuten befindlicher, die Nut(en) geringfügig überragender O-Ring die Drehbeweglichkeit und/oder Längsverschieblichkeit der Strebe hemmen. Bei diesen Ausgestaltungen der Erfindung ist es möglich, die Vertikalstrebe in die Öffnungen eines Schweißtisches und die Strebe in die Führung der Vertikalstrebe einzuführen, so dass ein Verspannen in Richtung der Tischplatte möglich ist. Dabei lässt sich die Höhe der Strebe über der Tischplatte durch unterschiedlich tiefes Einführen der Vertikalstrebe in die Öffnungen und der Abstand der Spanneinrichtung von der Vertikalstrebe durch unterschiedlich tiefes Einführen der Strebe in die Führung der Vertikalstrebe verändern. Gleichzeitig bleibt die Verstellmöglichkeit hinsichtlich der Richtung, in die die Spanneinrichtung wirkt, erhalten.

Eine einfache Ausgestaltung des Spannwerkzeugs ergibt sich, wenn die Strebe und/oder die Vertikalstrebe von einem Rundrohr gebildet ist/sind.

Mit einem auf der Strebe und/oder der Vertikalstrebe verstellbar angeordneten Stellring lässt sich vorgeben, wie tief die Strebe und/oder Vertikalstrebe in die Öffnung eines Schweißtischs eindringt. Der Stellring kann eine Nut in seinem Inneren aufweisen und ein in der Nut befindlicher, die Nut geringfügig überragender O-Ring die Längsverschieblichkeit des Stellrings auf der Strebe und/oder auf der Vertikalstrebe hemmen. Dabei ist ein nahezu vollständiges Eindringen und damit ein geringer Abstand der Spanneinrichtung von der Schweißtischplatte möglich, ohne dass ein störender Teil der Strebe und/der Vertikalstrebe nach oben hinaus steht.

Als Spanneinrichtung kann vorteilhaft eine Gewindespindel eingesetzt werden. In diesem Fall weist die Aufnahme ein quer verlaufendes Innengewinde auf, in welches das Außengewinde der Gewindespindel eingreift. Die Gewindespindel besitzt üblicherweise einen Handgriff und ein auswechselbares Prisma, so dass das Spannwerkzeug auf einfache Weise demontiert werden kann, indem das Prisma entfernt und die Gewindespindel aus der Aufnahme herausgeschraubt wird. Die Aufnahme lässt sich dann aus der Buchse herausnehmen.

Alternativ ist es auch möglich, als Spanneinrichtung eine Schnellspanneinrichtung zu verwenden.

Anhand der Zeichnung wird die Erfindung näher erläutert. Es zeigen:
Fig. 1 eine perspektivische Ansicht eines Spannwerkzeugs,
Fig. 2 bis 4 Seitenansichten des Spannwerkzeugs mit verschiedenen Richtungen, in die die Spanneinrichtung wirkt,
Fig. 5 und 6 verschiedene Ansichten der Strebe des Spannwerkzeugs,
Fig. 7 einen vergrößert dargestellten Schnitt entlang der Linie VII-VII der Fig. 6,
Fig. 8 einen vergrößert dargestellten Schnitt entlang der Linie VIII-VIII der Fig. 6,
Fig. 9 bis 11 verschiedene Ansichten der Aufnahme des Spannwerkzeugs,
Fig. 12 einen vergrößert dargestellten Stellring des Spannwerkzeugs,
Fig. 13 einen Schnitt entlang der Linie XIII-XIII der Fig. 12,
Fig. 14 bis 16 Seitenansichten des Spannwerkzeugs mit Vertikalstrebe mit verschiedenen Richtungen, in die die Spanneinrichtung wirkt,
Fig. 17 und 18 verschiedene Ansichten der Vertikalstrebe des Spannwerkzeugs und
Fig. 19 einen vergrößert dargestellten Schnitt entlang der Linie XIX-XIX der Fig. 18.

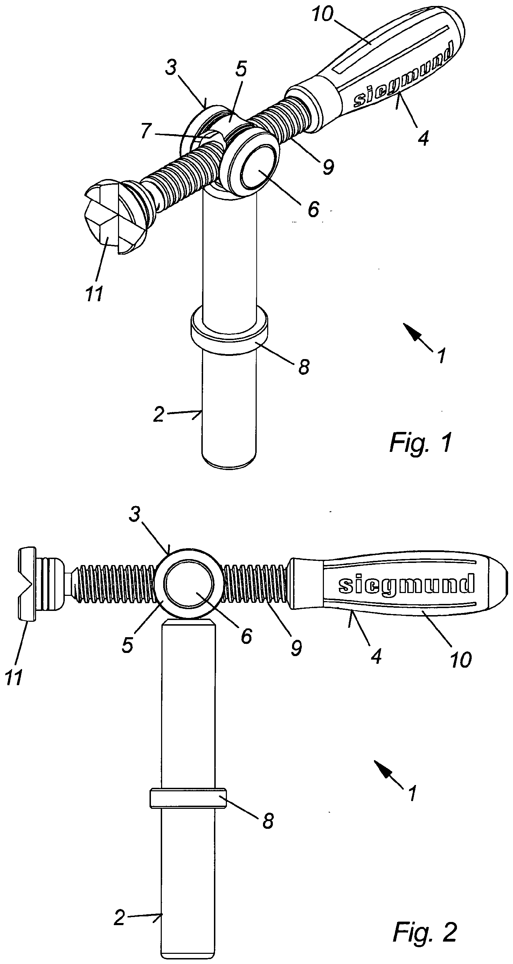

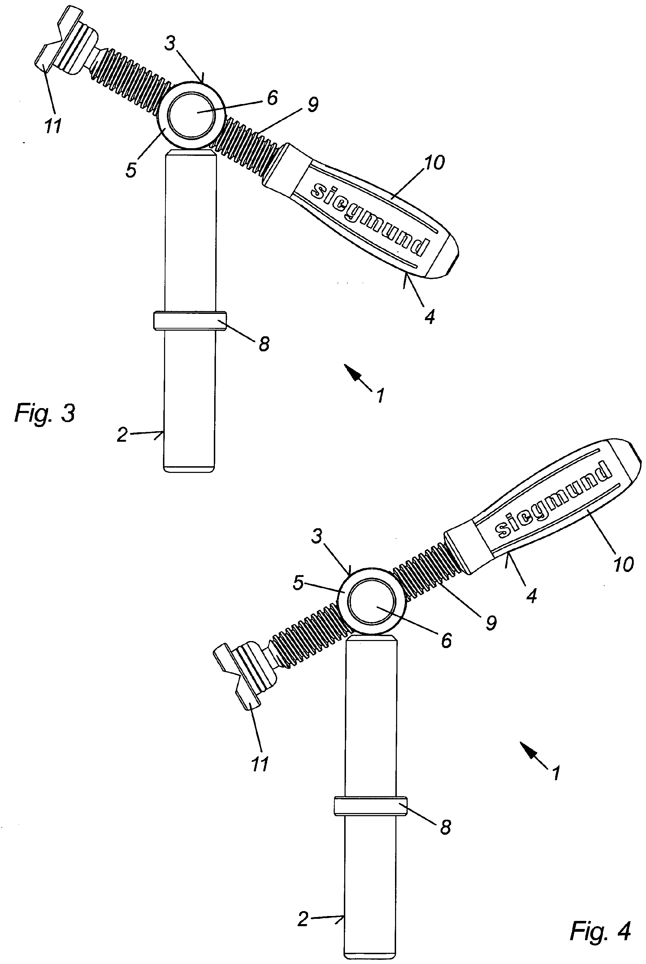

In den Fig. 1 bis 4 sind verschiedene Ansichten eines Spannwerkzeugs 1 dargestellt.

Das Spannwerkzeug 1 umfasst eine Strebe 2, die in eine Öffnung, beispielsweise eines Schweißtisches einführbar und von einem Rundrohr gebildet ist. Es könnte auch ein Rohr anderen Querschnitts, ein Flacheisen oder dergleichen verwendet werden.

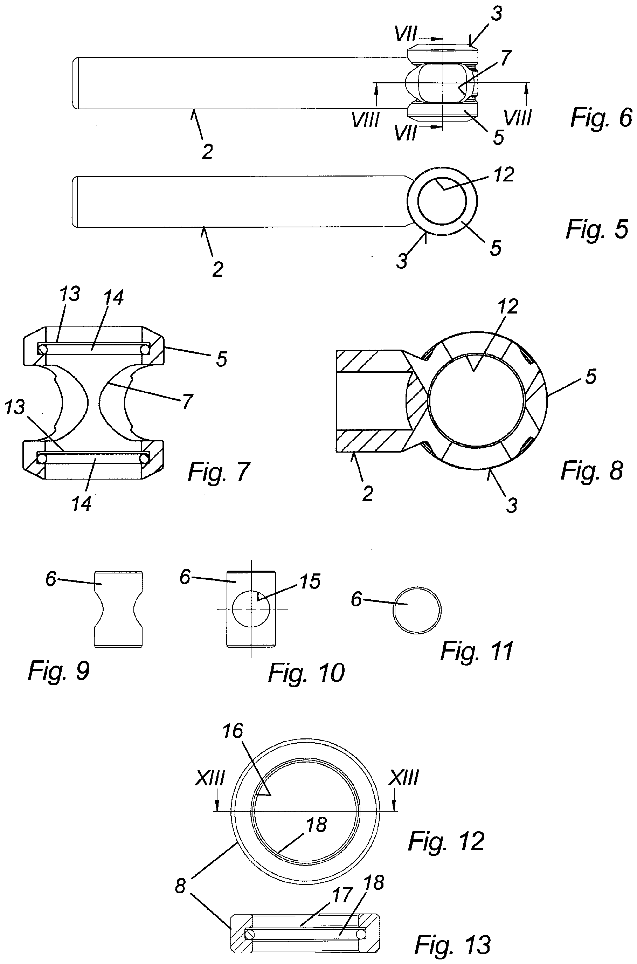

An einem Ende der Strebe 2 ist eine Halterung 3 für eine Spanneinrichtung 4 angeordnet, wobei die Spanneinrichtung 4 um eine senkrecht zur Längsrichtung der Strebe 2 verlaufende Achse schwenkbar ist, wie dies nachfolgend noch näher erläutert wird. Die Halterung 3 umfasst eine an der Strebe 2 angeordnete Buchse 5, in der eine Aufnahme 6 für die Spanneinrichtung 4 drehbar gelagert ist. Außerdem weist die Buchse 5 Ausnehmungen 7 für die Spanneinrichtung 4 auf. Nähere Einzelheiten der Buchse 5 und der Aufnahme 6 sind anhand der Fig. 5 bis 8 und 9 bis 11 erläutert.

Auf der Strebe 2 ist ein Stellring 8 längsverschieblich angeordnet. Mit dem Stellring 8 lässt sich die Tiefe, mit der die Strebe 2 in die Öffnung einführbar ist, verändern. Dieser Stellring 8 ist nicht zwingend erforderlich für die Funktion des Spannwerkzeugs 1. Nähere Einzelheiten des Stellrings 8 sind anhand der Fig. 12 und 13 erläutert.

In der Halterung 3 ist eine Gewindespindel 9 als Spanneinrichtung 4 um eine senkrecht zur Längsrichtung der Strebe 2 verlaufende Achse schwenkbar. Dazu weist die drehbar gelagerte Aufnahme 6 ein quer verlaufendes Innengewinde auf, in welches das Außengewinde der Gewindespindel 9 eingreift. Anstelle der Gewindespindel 9 könnte auch eine Schnellspanneinrichtung oder ein anderer Spannmechanismus Verwendung finden. Die Gewindespindel 9 besitzt einen Handgriff 10 und ein auswechselbares Prisma 11.

Anhand der Fig. 2 bis 4 wird deutlich, dass sich die Richtung, in die die Spanneinrichtung 4 wirkt, im Rahmen der Abmessungen der Ausnehmungen 7 in der Buchse 5 verstellen lässt, indem die Spanneinrichtung 4 mit der Aufnahme 6 in der Buchse 5 gedreht wird.

Das Spannwerkzeug 1 kann auf einfache Weise demontiert werden, indem das Prisma 11 entfernt und die Gewindespindel 9 aus der Aufnahme 6 herausgeschraubt wird. Die Aufnahme 6 lässt sich dann aus der Buchse 5 herausnehmen.

Anhand der Fig. 6 bis 8 ist der Aufbau der Strebe 2 und insbesondere der Buchse 5 näher erläutert.

An einem Ende der Strebe 2 ist die Halterung 3 angeordnet, die die Buchse 5 mit Ausnehmungen 7 umfasst. In ihrem Inneren 12 weist die Buchse 5 zwei Nuten 13 auf, in denen sich jeweils ein die Nuten 13 geringfügig überragender O-Ring 14 befindet. Die O-Ringe 14 hemmen die Drehbeweglichkeit der Aufnahme 6 in der Buchse 5, ohne diese vollständig zu verhindern. Es versteht sich, dass auch lediglich eine Nut 13 mit einem O-Ring 14 oder weitere Nuten 13 mit O-Ringen 14 vorgesehen sein könnten.

Anhand der Fig. 9 bis 11 ist der Aufbau der Aufnahme 6 näher erläutert.

Die Aufnahme 6 ist zylindrisch ausgestaltet, um auf einfache Weise eine Drehbeweglichkeit in der Buchse 5 zu erreichen. Die Aufnahme 6 weist ein quer zur Längsrichtung der Aufnahme 6 verlaufendes Innengewinde 15 auf, in welches das Außengewinde der Gewindespindel 9 eingreifen kann.

Anhand der Fig. 12 und 13 ist der Stellring 8 näher erläutert.

Der Stellring 8 weist in seinem Inneren 16 eine Nut 17 auf, in der sich ein die Nut 17 geringfügig überragender O-Ring 18 befindet. Der O-Ring 18 hemmt die Längsverschieblichkeit des Stellrings 8 auf der Strebe 2, ohne diese vollständig zu verhindern.

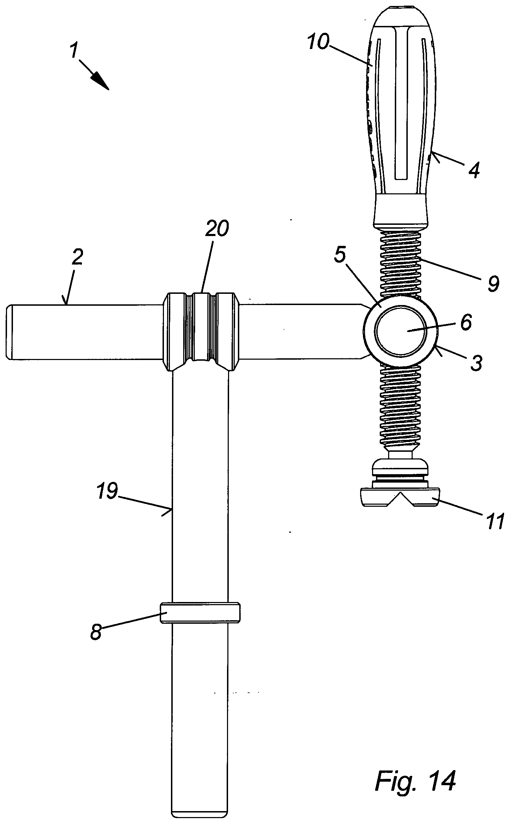

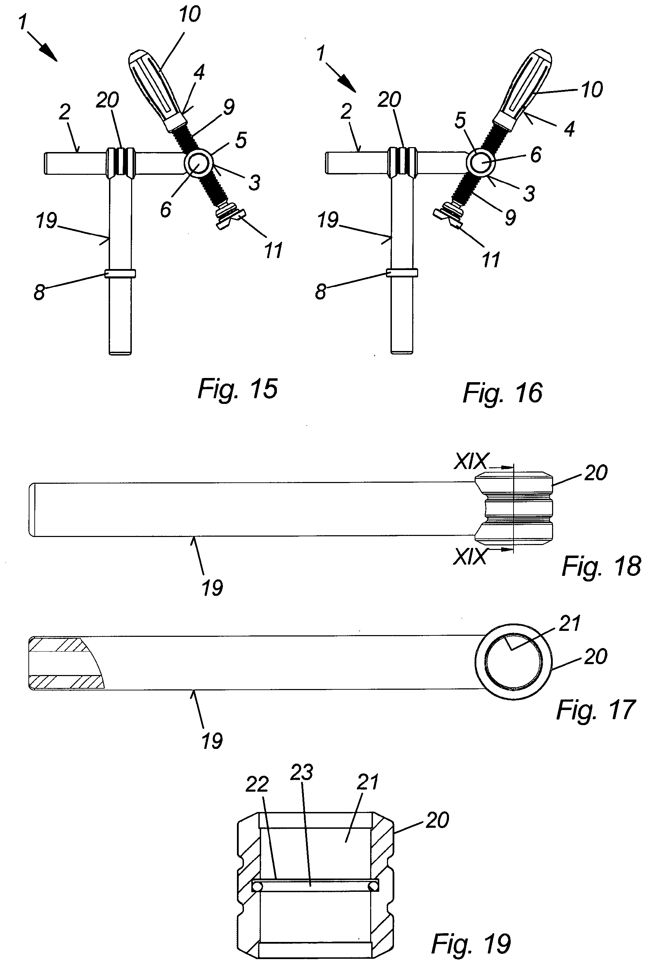

Bei dem in den Fig. 14 bis 16 dargestellten Spannwerkzeug 1 ist die Strebe 2 in eine an einem Ende einer Vertikalstrebe 19 angeordnete Führung 20 eingeführt. Nähere Einzelheiten der Führung 20 sind anhand der Fig. 17 bis 19 erläutert.

Die Vertikalstrebe 19 ist in eine Öffnung, beispielsweise eines Schweißtisches einführbar und von einem Rundrohr gebildet. Es könnte auch ein Rohr anderen Querschnitts, ein Flacheisen oder dergleichen verwendet werden. Mit der Ausführungsform der Fig. 14 bis 16 ist somit ein Verspannen in Richtung der Tischplatte möglich. Dabei lässt sich die Höhe der Strebe 2 über der Tischplatte durch unterschiedlich tiefes Einführen der Vertikalstrebe 19 in die Öffnungen und der Abstand der Spanneinrichtung 4 von der Vertikalstrebe 19 durch unterschiedlich tiefes Einführen der Strebe 2 in die Führung 20 der Vertikalstrebe 19 verändern. Gleichzeitig bleibt die Verstellmöglichkeit hinsichtlich der Richtung, in die die Spanneinrichtung 4 wirkt, erhalten.

Auf der Vertikalstrebe 19 ist ein Stellring 8 längsverschieblich angeordnet. Mit dem Stellring 8 lässt sich die Tiefe, mit der die Vertikalstrebe 19 in die Öffnung einführbar ist, verändern. Dieser Stellring 8 ist nicht zwingend erforderlich für die Funktion des Spannwerkzeugs 1. Nähere Einzelheiten des Stellrings 8 sind anhand der Fig. 12 und 13 erläutert.

Anhand der Fig. 17 bis 19 ist der Aufbau der Vertikalstrebe 19 und insbesondere der Führung 20 näher erläutert.

An einem Ende der Vertikalstrebe 19 ist die Führung 20 angeordnet. In ihrem Inneren 21 weist die Führung 20 eine Nut 22 auf, in der sich ein die Nut 22 geringfügig überragender 0-Ring 23 befindet. Der O-Ring 23 hemmt die Drehbeweglichkeit und/oder Längsverschieblichkeit der Strebe 2 in der Führung 20, ohne diese vollständig zu verhindern. Es versteht sich, dass auch weitere Nuten 22 mit O-Ringen 23 vorgesehen sein könnten.

Die Verwendung des Spannwerkzeugs 1 ist nicht auf die beschriebenen Schweißtische begrenzt, sondern kann überall dort erfolgen, wo das Spannwerkzeug 1 mit seiner Strebe 2 und/oder seiner Vertikalstrebe 19 in Öffnungen einführbar ist.

### Bezugszeichenliste

- 1: Spannwerkzeug
- 2: Strebe
- 3: Halterung
- 4: Spanneinrichtung
- 5: Buchse
- 6: Aufnahme
- 7: Ausnehmungen
- 8: Stellring
- 9: Gewindespindel
- 10: Handgriff
- 11: Prisma
- 12: Inneres von 5
- 13: Nut
- 14: O-Ring
- 15: Innengewinde von 6
- 16: Inneres von 8
- 17: Nut
- 18: O-Ring
- 19: Vertikalstrebe
- 20: Führung
- 21: Inneres von 20
- 22: Nut
- 23: O-Ring

## Patentansprüche

1. Spannwerkzeug (1) mit einer Strebe (2), an deren einem Ende eine Halterung (3) für eine Spanneinrichtung (4) angeordnet ist, wobei die Spanneinrichtung (4) um eine senkrecht zur Längsrichtung der Strebe (2) verlaufende Achse schwenkbar ist,
**dadurch gekennzeichnet, dass**
die Halterung (3) eine an der Strebe (2) angeordnete Buchse (5) umfasst, in der eine Aufnahme (6) für die Spanneinrichtung (4) drehbar gelagert ist, wobei die Buchse (5) wenigstens eine Nut (13) in ihrem Inneren (12) sowie Ausnehmungen (7) für die Spanneinrichtung (4) aufweist und ein in der Nut/den Nuten (13) befindlicher, die Nut(en) (13) geringfügig überragender O-Ring (14) die Drehbeweglichkeit der Aufnahme (6) hemmt.

2. Spannwerkzeug (1) nach Anspruch 1, **dadurch gekennzeichnet, dass** die Buchse (5) zwei Nuten (13) mit jeweils einem O-Ring (14) aufweist.

3. Spannwerkzeug (1) nach einem der vorhergehenden Ansprüche, **dadurch gekennzeichnet, dass** die Aufnahme (6) zylindrisch ausgestaltet ist.

4. Spannwerkzeug (1) nach einem der vorhergehenden Ansprüche, **dadurch gekennzeichnet, dass** die Strebe (2) in eine an einem Ende einer Vertikalstrebe (19) angeordnete Führung (20) einführbar ist.

5. Spannwerkzeug (1) nach Anspruch 4, **dadurch gekennzeichnet, dass** die Führung (20) wenigstens eine Nut (22) in ihrem Inneren (21) aufweist und ein in der Nut/den Nuten (22) befindlicher, die Nut(en) (22) geringfügig überragender O-Ring (23) die Drehbeweglichkeit und/oder Längsverschieblichkeit der Strebe (2) hemmt.

6. Spannwerkzeug (1) nach einem der vorhergehenden Ansprüche, **dadurch gekennzeichnet, dass** die Strebe (2) und/oder die Vertikalstrebe (19) von einem Rundrohr gebildet ist/sind.

7. Spannwerkzeug (1) nach einem der vorhergehenden Ansprüche, **dadurch gekennzeichnet, dass** ein Stellring (8) auf der Strebe (2) und/oder auf der Vertikalstrebe (19) angeordnet ist, wobei der Stellring (8) eine Nut (17) in seinem Inneren (16) aufweist und ein in der Nut (17) befindlicher, die Nut (17) geringfügig überragender 0-Ring (18) die Längsverschieblichkeit des Stellrings (8) auf der Strebe (2) und/oder auf der Vertikalstrebe (19) hemmt.

8. Spannwerkzeug (1) nach einem der Ansprüche 1 bis 7, **dadurch gekennzeichnet, dass** die Spanneinrichtung (4) eine Gewindespindel (9) ist und die Aufnahme (6) ein quer verlaufendes Innengewinde (15) aufweist, in welches das Außengewinde der Gewindespindel (9) eingreift.

9. Spannwerkzeug (1) nach einem der Ansprüche 1 bis 7, **dadurch gekennzeichnet, dass** die Spanneinrichtung (4) eine Schnellspanneinrichtung ist.

## Claims

1. Clamping tool (1), comprising a strut (2) having one end for arrangement of a mount (3) for a clamping device (4), with the clamping device (4) being swingable about an axis perpendicular to the longitudinal direction of the strut (2),
**characterized in that**
the mount (3) includes a bushing (5) which is mounted on the strut (2) and in which a receptacle (6) for the clamping device (4) is rotatably mounted, with the bushing (5) having an interior (12) with at least one groove (13) as well as recesses (7) for the clamping device (4), and an O-ring (14) which is placed inside the groove/grooves (13) and slightly extends beyond the groove(s) (13) to inhibit the rotational mobility of the receptacle (6).

2. Clamping tool (1) according to claim 1, **characterized in that** the bushing (5) has two grooves (13), each with an O-ring (14).

3. Clamping tool (1) according to one of the preceding claims, **characterized in that** the receptacle (6) is cylindrically shaped.

4. Clamping tool (1) according to one of the preceding claims, **characterized in that** the strut (2) is insertable in a guide (20) which is arranged at one end of a vertical strut (19).

5. Clamping tool (1) according to claim 4, **characterized in that** the guide (20) has at least one groove (22) in its interior (21) and an O-ring (23) which is placed in the groove/grooves (22) and slightly extends beyond the groove(s) (22) to inhibit the rotational mobility and/or longitudinal shiftability of the strut (2).

6. Clamping tool (1) according to one of the preceding claims, **characterized in that** the strut (2) and/or the vertical strut (19) is/are formed from a round tube.

7. Clamping tool (1) according to one of the preceding claims, **characterized in that** an adjustment ring (8) is arranged on the strut (2) and/or on the vertical strut (19), with the adjustment ring (8) having a groove (17) in its interior (16) and an O-ring which is placed inside the groove (17) and slightly extends beyond the groove (17) to inhibit the longitudinal shiftability of the adjustment ring (8) on the strut (2) and/or on the vertical strut (19).

8. Clamping tool (1) according to one of claims 1 to 7, **characterized in that** the clamping device (4) is a threaded spindle (9), and the receptacle (6) has a transverse internal thread (15) into which the external thread of the threaded spindle (9) engages.

9. Clamping tool (1) according to one of the claims 1 to 7, **characterized in that** the clamping device (4) is a quick-release clamping device.

## Revendications

1. Outil de serrage (1) comportant un montant (2), sur une extrémité duquel est disposé un support (3) pour un dispositif de serrage (4), le dispositif de serrage (4) étant apte à pivoter autour d'un axe s'étendant perpendiculairement à la direction longitudinale du montant (2),
**caractérisé par le fait que**
le support (3) comporte une douille (5) disposée sur le montant (2), dans laquelle un logement (6) pour le dispositif de serrage (4) est monté de manière rotative, la douille (5) présentant au moins une gorge (13) dans son intérieur (12) ainsi que des évidements (7) pour le dispositif de serrage (4) et un joint torique (14) se trouvant dans la gorge/les gorges (13) faisant légèrement saillie de la ou des gorges (13), empêchant le mouvement de rotation du logement (6).

2. Outil de serrage (1) selon la revendication 1, **caractérisé par le fait que** la douille (5) présente deux gorges (13) ayant chacune un joint torique (14).

3. Outil de serrage (1) selon l'une des revendications précédentes, **caractérisé par le fait que** le logement (6) est conçu cylindrique.

4. Outil de serrage (1) selon l'une des revendications précédentes, **caractérisé par le fait que** le montant (2) est apte à être introduit dans un guide (20) disposé sur une extrémité d'un montant vertical (19).

5. Outil de serrage (1) selon la revendication 4, **caractérisé par le fait que** le guide (20) présente au moins une gorge (22) dans son intérieur (21) et un joint torique (23) se trouvant dans la gorge/les gorges (22), faisant légèrement saillie de la ou des gorges (22), empêche le mouvement de rotation et/ou le déplacement longitudinal du montant (2).

6. Outil de serrage (1) selon l'une des revendications précédentes, **caractérisé par le fait que** le montant (2) et/ou le montant vertical (19) est/sont formés d'un tube rond.

7. Outil de serrage (1) selon l'une des revendications précédentes, **caractérisé par le fait qu'**une bague de réglage (8) est disposée sur le montant (2) et/ou sur le montant vertical (19), la bague de réglage (8) présentant une gorge (17) dans son intérieur (16) et un joint torique (18) se trouvant dans la gorge (17), faisant légèrement saillie de la gorge (17), empêchant le déplacement longitudinal de la bague de réglage (8) sur le montant (2) et/ou sur le montant vertical (19).

8. Outil de serrage (1) selon l'une des revendications 1 à 7, **caractérisé par le fait que** le dispositif de serrage (4) est une tige filetée (9) et le logement (6) présente un taraudage (15) s'étendant transversalement, dans lequel le filetage externe de la tige filetée (9) s'engage.

9. Outil de serrage (1) selon l'une des revendications 1 à 7, **caractérisé par le fait que** le dispositif de serrage (4) est un dispositif de serrage rapide.
